# FASCICULE DE BREVET EUROPEEN

(11) **EP 1 761 888 B1**
(45) Date de publication et mention de la délivrance du brevet: **07.03.2012**
(21) Numéro de dépôt: 05717361.9
(22) Date de dépôt: 05.01.2005
(51) Int. Cl.: G06Q 10/00, G08B 27/00, G04G 9/00, G01W 1/10

(54) **DISPOSITIF DE SIGNALISATION DE PREVISIONS IMMEDIATES DE PRECIPITATIONS**
VORRICHTUNG ZUR ANZEIGE DER VORHERSAGE UNMITTELBAR BEVORSTEHEN DER NIEDERSCHLÄGE
DEVICE FOR SIGNALING IMMEDIATE RAINFALL FORECASTS

(30) Priorité: 05.01.2004 FR 0400030
(43) Date de publication de la demande: 14.03.2007
(73) Titulaire: Leclabart, Denis, 92240 Vaucresson (FR); DNP, 50370 St-Georges de Livoye (FR)
(72) Inventeur: BADOCHE JACQUET, Guy, F-92420 Vaucresson (FR); DUPONT, Michel, F-50370 St-Georges de Livoye (FR)
(74) Mandataire: Plaçais, Jean Yves
(86) Numéro de dépôt international: PCT/FR2005/000013
(87) Numéro de publication internationale: WO 2005/069183

(56) Documents cités:
- WO-A-01/80129
- WO-A-02/49310
- DE-A- 19 720 591
- US-B2- 6 590 529

## Description

L'invention a trait aux prévisions météorologiques, et concerne plus particulièrement un Dispositif pour signaler des prévisions de précipitations à au moins un utilisateur.

Dans ce domaine, on connaît déjà la demande de brevet WO 02/49310, le brevet US-6 590 529, le brevet US 6 654 689, ou la demande de brevet WO 92/10804. Tous proposent des systèmes informatiques lourds donnant, sur demande d'un utilisateur, des données de prévision météorologiques généralistes, adaptées au lieu demandé, et valables à l'échelle de la ou des prochaines heures. Leur interface utilisateur est de type classique en informatique. L'usage de ces systèmes manque manifestement d'ergonomie, autant que de convivialité.

A côté de cela, la demande de brevet DE 197 20 59.1 décrit une montre mise à jour par radio sur la base d'une horloge atonique. La transmission radio comporte aussi des informations diverses, notamment d'ordre environnemental : annonce de catastrophes, ou prévisions météo généralistes et sommaires, exprimées à l'échelle de la journée. Quoique d'un certain intérêt convivial, cette proposition n'apporte pas d'informations pratiques plus efficaces que celles diffusées par radio d'un manière générale.

Il n'existe donc pas d'outil réellement convivial et ergonomique, qui mette à disposition de son porteur des prévisions de précipitations fiables dans l'immédiat.

La présente invention vient améliorer la situation.

L'invention part d'un dispositif télématique à affichage, du type comprenant des moyens de télécommunication, capables d'interagir avec un réseau pour l'échange de données, et une interface utilisateur, capable d'interagir avec les moyens de télécommunication, pour afficher des informations tirées des données reçues. Les moyens de télécommunication sont agencés pour recevoir des données météorologiques, dont il est tiré un affichage sur l'interface utilisateur.

Ce dispositif est aménagé comme suit :
- les moyens de télécommunication sont agencés pour interagir spontanément avec une station, afin d'une part de définir une zone géographique, et d'autre part d'accéder de manière sensiblement régulière à un jeu de données comprenant des couples prévision pluviale/durée, valables dans ladite zone géographique pour des périodes consécutives, ce jeu de données étant daté par un marqueur de temps ;
- l'interface utilisateur possède une plage, de segments d'affichage ordonnés, capables chacun d'un affichage à plusieurs états, et
- en ce que le dispositif comprend un pilote, capable de réagir à une réception d'un jeu de données par la mise à jour de l'état de certains au moins des segments d'affichage, et ceci sélectivement en fonction du ou des couples prévision pluviale/durée que contiennent les données reçues et de la relation entre le marqueur de temps de ce jeu et une référence temporelle des segments.

L'invention offre également un procédé, qui sera défini plus loin.

D'autres caractéristiques et avantages de l'invention apparaîtront. à la lumière de la description faite ci-après en référence aux dessins annexés dans lesquels
- la figurer 1 est une représentation schématique d'un téléphone cellulaire équipé d'un dispositif de signalisation de prévisions de précipitations ;
- la figure 2 est une vue agrandie de l'écran du téléphone de la figure 1, suivant le détail identifié par l'encart II, suivant un mode de réalisation où l'interface utilisateur du dispositif de signalisation comporte un cadran à contour circulaire;
- la figure 3 est une représentation schématique des différentes indications météorologiques susceptibles d'être portées sur le cadran de l'interface utilisateur;
- la figure 4 est une vue en plan de dessus d'une montre équipée d'un dispositif de signalisation de prévisions de précipitations ;
- la figure 5 est une représentation schématique partielle d'un dispositif de signalisation de prévisions de précipitations comportant une interface utilisateur dont le cadran est linéaire ;
- la figure 6 est une représentation schématique d'un réseau de communication permettant le fonctionnement d'un dispositif de signalisation de prévisions de précipitations tel que représenté sur les figures précédentes ; et

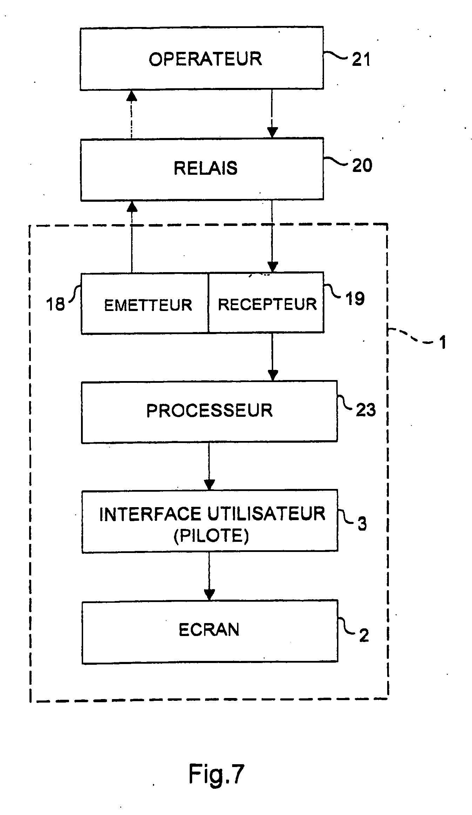

- la figure 7 est une représentation schématique d'un système de communication destiné à permettre l'affichage de prévisions de précipitations fournies par le réseau de la figure 6.

L'intérêt des prévisions météorologiques n'est plus à démontrer. Les médias de masse ont depuis longtemps intégré à leurs communications des informations concernant la météo du lendemain ou même des jours suivants, dans un pays ou une région donnée.

La prévision « immédiate » est une prévision météorologique pour une échéance très courte, allant de quelques minutes à deux ou trois heures au maximum. Elle s'appuie donc essentiellement sur l'observation actuelle du temps et en premier lieu, sur les données des radars météorologiques. Elle concerne la prévision de précipitations (pluie) ou de phénomènes liés (tornades, orages), est plus récente et constitue un domaine d'extension de la météorologie.

Comme l'ont observé les Demanderesses, le besoin se faitressentir, tant chez les particuliers que chez certains professionnels dont le temps climatique a un impact immédiat sur l'activité, d'accéder instantanément à des informations sur la météo prévue dans une zone géographique restreinte incluant par exemple leur lieu d'activité et dans un intervalle de temps prédéterminé relativement bref, compatible avec la précision de la localisation et avec les données relatives à la prévision « immédiate » de précipitations.

Les Demanderesses ont également observé que les moyens modernes de mesure, de calcul et de communication autorisent la fourniture quasi permanente et instantanée de telles informations.

Elles ont encore observé qu'il existe une grande différence de variabilité entre les paramètres météo classiques (température, nébulosité, pression atmosphérique) et les précipitations. Ainsi les paramètres météo classiques varient-ils lentement (c'est-à-dire sur des durées de plusieurs heures) et sont relativement uniformes dans des zones géographiques étendues (plusieurs dizaines, voire plusieurs centaines de km2).

Par contre, les précipitations peuvent quant à elles varier rapidement (sur des durées de l'ordre de quelques minutes) et ne sont uniformes que dans des zones géographiques extrêmement restreintes (de l'ordre du km2, voire quelques km2). De ce fait, leur prévisibilité dans des zones géographiques restreintes est très incertaine en comparaison des paramètres météo classiques.

Le dispositif qui va maintenant être décrit utilise ces observations.

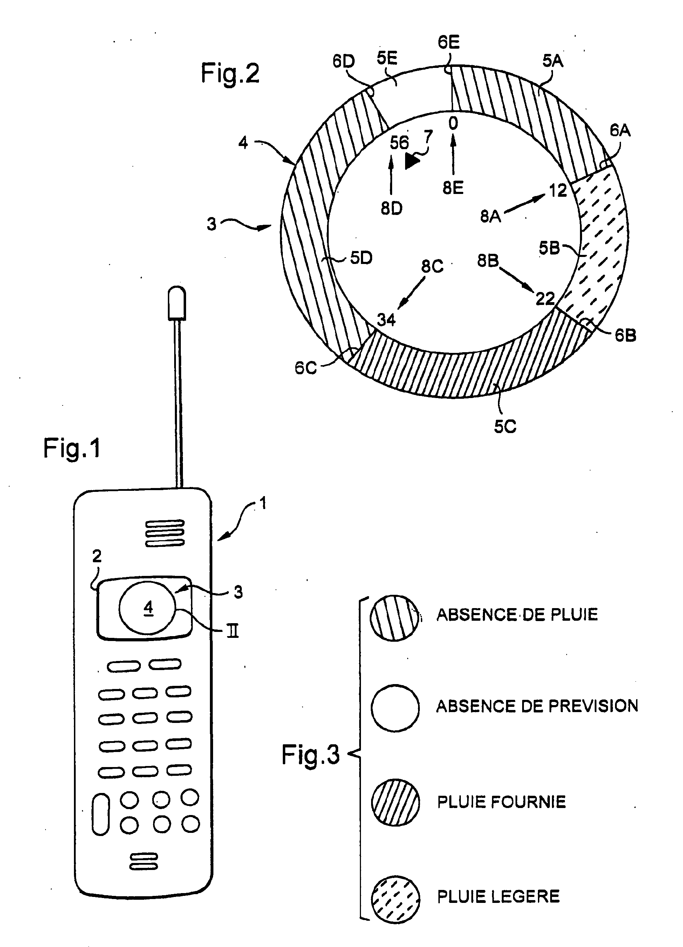

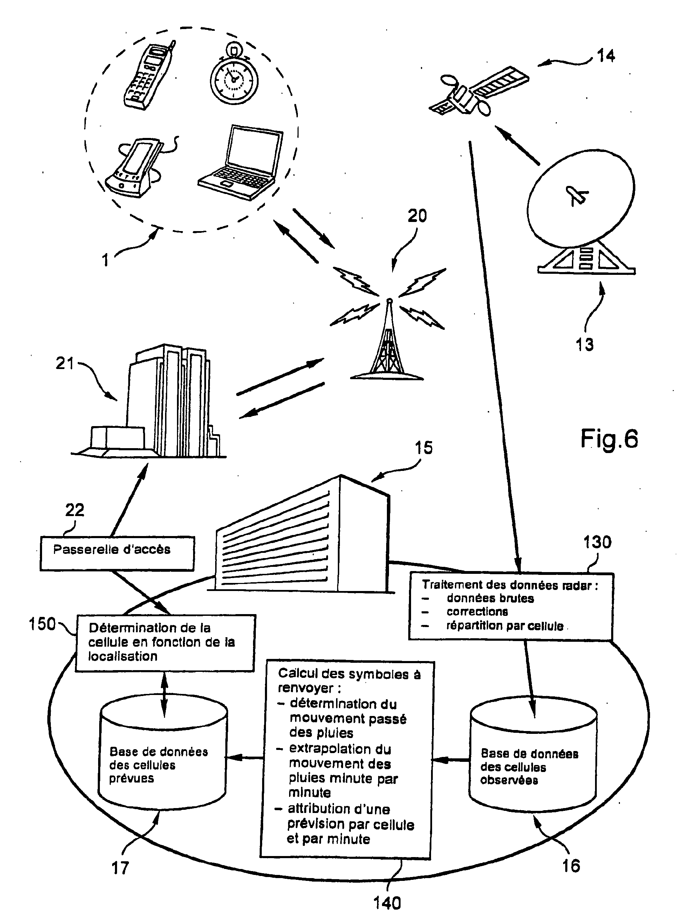

Sur la figure 1 est représenté un appareil électronique 1 comportant un système de communication à distance. Il s'agit en l'occurrence d'un téléphone cellulaire, mais il pourrait tout aussi bien s'agir, comme cela est représenté sur la figure 6, d'un ordinateur personnel, fixe ou portable, d'un assistant personnel numérique (PDA) ou encore d'une montre équipée d'un système de communication à distance. Bien que cela ne soit pas illustré, il pourrait aussi s'agir d'un appareil de contrôle intégré à système d'aide à la navigation.

Comme cela est représenté sur la figure 6, cet appareil 1 est relié à un réseau de communication avec ou sans fil avec lequel il échange des informations, comme cela sera décrit ci-après.

Cet appareil 1 comporte un écran 2 sur lequel peuvent être affichées un certain nombre d'informations, parmi lesquelles des prévisions immédiates de précipitations (c'est-à-dire de pluie) relatives à une zone géographique dans laquelle se trouve (ou se trouvait) l'appareil 1 à un instant donné.

Le protocole mis en oeuvre pour localiser géographiquement l'appareil, et lui communiquer les données décrivant des prévisions de précipitations, sera décrit plus loin. Pour le moment, on considère que l'appareil dispose à chaque instant ou régulièrement de prévisions de précipitations pour une zone géographique restreinte, d'intérêt pour le porteur.

L'appareil 1 dispose d'une interface utilisateur intégrée, comprenant un pilote 3, prévu pour assurer l'affichage, sur l'écran 2, des prévisions de précipitations sous une forme particulière.

L'affichage sur l'écran 2 comporte une plage 4 ou "cadran chronologique", représentatif d'un intervalle temporel prédéterminé (en l'occurrence une heure).

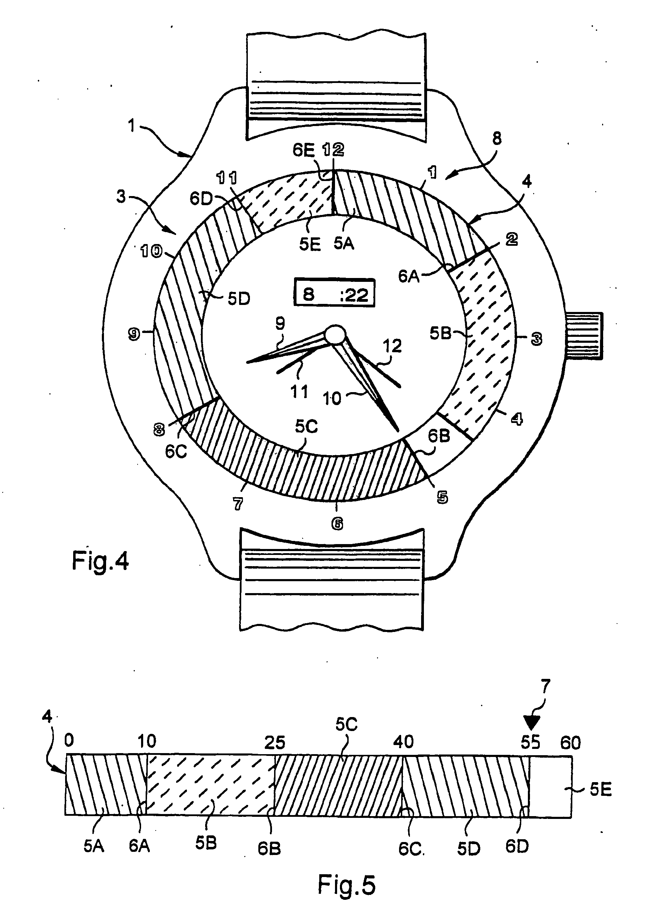

Suivant un mode de réalisation illustré sur les figures 2 et 4, le cadran 4 présente un contour circulaire, au sens où ce contour est bouclé sur lui-même, conformément à la nature cyclique de l'intervalle temporel considéré. Le contour du cadran 4 présente, dans l'exemple illustré sur les figures 2 et 4, un profil rond, mais ce profil pourrait également être ovale, carré, rectangulaire, polygonal, ou plus généralement un profil fermé choisi suivant l'esthétique retendue ou la place disponible sur l'écran 2 de l'appareil 1.

En variante, le cadran 4 pourrait également être linéaire, comme cela est représenté sur la figure 5.

Le cadran 4 est susceptible d'être subdivisé en secteurs adjacents 5A, 5B, 5C, 5D, 5E. Ceux-ci forment une plage de segments d'affichage ordonnés (5A à 5E), capables chacun d'un affichage à plusieurs états. Comme on le verra, à chaque secteur correspond une prévision de précipitations différente de celles des secteurs qui lui sont immédiatement adjacents. Les secteurs 5A, 5B, 5C, 5D, 5E peuvent être séparés les uns des autres par des limites 6A, 6B, 6C, 6D, 6E (en l'occurrence rectilignes) repérées chronologiquement sur le cadran 4. Ces limites peuvent correspondre aux instants des changements prévus de conditions de précipitations. Autrement dit, les secteurs ou segments possèdent une référence temporelle, et, dans cet exemple, une graduation 8.

Autrement dit, chaque secteur 5A, 5B, 5C, 5D, 5E représente un sous-intervalle temporel, repérable sur le cadran 4 au premier coup d'oeil. Dans les exemples illustrés sur les figures 2 et 4, où le cadran 4 est circulaire (à profil rond), les secteurs 5A, 5B, 5C, 5D, 5E sont des secteurs angulaires centrés par rapport au cadran, tandis que dans l'exemple illustré sur la figure 5, où le cadran est linéaire, les secteurs 5A, 5B, 5C, 5D, 5E se présentent sous la forme de pavés rectangulaires alignés.

Par ailleurs, l'interface 3 comporte des moyens pour afficher au sein d'au moins un secteur 5A, 5B, 5C, 5D, 5E des informations - lorsqu'elles sont disponibles - représentatives d'une prévision de précipitations prédéterminée pour le sous-intervalle temporel correspondant à ce secteur 5A, 5B, 5C, 5D, 5E.

Dans l'exemple ici décrit, les segments sont composés de cristaux liquides. Le pilote 3 peut commander chaque segment pour l'affichage de trois ou quatre états distincts. Dans cet exemple, ces états sont : un "à-plat" clair, ou coloration claire continue du segments ; des traits fins courts dans le segment ; un à-plat foncé, ou coloration foncée continue du segment ; une absence d'affichage dans le segment (cette coloration est, par convention, supposée blanche sur la figure 3).

Le premier état peut correspondre à une prévision d'absence de pluie, signifiant par exemple un temps ensoleillé ou nuageux mais non pluvieux. Le second état peut correspondre à une prévision de pluie fine ou en gouttes ("pluie légère"), signifiant par exemple un temps nuageux menaçant, une pluie éparse, ou même un crachin. Le troisième état peut correspondre à une prévision de pluie forte ou intense ("pluie fournie"), signifiant par exemple une pluie continue ou des averses. Enfin, le quatrième état peut correspondre à une absence de prévision de précipitations, signifiant par exemple que la communication est coupée ou que les prévisions de précipitations sont indisponibles.

Bien entendu, les états d'affichage indiqués sont donnés à titre d'exemple, et d'autres graphismes correspondant à l'interprétation désirée peuvent être utilisés, de sorte que l'utilisateur puisse immédiatement distinguer les prévisions les unes des autres. L'homme du métier peut envisager de nombreuses variantes dans le nombre et l'affichage des états, afin d'indiquer de manière claire les prévisions de précipitations pour un segment donné. Ainsi, pour un segment affichant l'état correspondant à une absence de pluie, des traits continus pourraient être affichés perpendiculairement au bord du segment, pour suggérer les rayons du soleil.

D'une manière générale, il convient que l'affichage forme une plage de segments d'affichage ordonnés, capables chacun d'un affichage à plusieurs états. Cet affichage peut être assuré par divers moyens connus tels que les cristaux liquides par exemple. Cet affichage peut également être un affichage à technologie OLED (Organic Light Emitting Diode).

Dans le mode de réalisation illustré sur la figure 2, les segments sont affichés par rapport à une référence temporelle correspondant à une origine de la plage. L'affichage ordonné des segments est alors réalisé à partir d'un segment d'origine, qui est ici le rayon vertical haut. Un curseur mobile 7 représente le moment de la prévision (l'instant auquel ont été observées les données radar brutes utilisées pour la prévision immédiate des précipitations), et également l'origine, mais d'une manière indirecte dans ce mode de réalisation. (On pourrait d'ailleurs considérer que l'origine de temps est le moment de la prévision).

Des affichages numériques 8A, 8B, 8C, 8D, 8E peuvent être également prévus en regard des limites 6A, 6B, 6C, 6D, 6E (ou de certaines d'entre elles). Ils permettent d'afficher la durée cumulée correspondant à la limite qu'ils jouxtent.

La prévision actuelle est affichée dans le segment 5A correspondant à la référence temporelle ; et le segment qui la précède affiche un état correspondant à une absence de prévision. Cet état est distinctif pour permettre de déterminer la date de dernière réception.

Dans le mode de réalisation de la figure 2, la plage ou cadran 4, a une signification temporelle relative, définie par rapport à l'instant présent (l'origine). L'affichage est ici représentatif, à chaque instant, de la prévision pour l'heure (c'est-à-dire les 60 minutes) à venir.

Ainsi, dans l'exemple représenté, les données radar brutes utilisées lors de la dernière réception ont été observées il y a quatre minutes (le marquage mobile étant en regard de la mention chiffrée 8D indiquant « 56 »), et les prévisions de précipitation pour l'heure à venir à compter de l'instant de la consultation sont les suivantes:
- d'ici à 12 minutes : absence de pluie ;
- dans l'intervalle de temps compris entre 12 et 22 minutes à compter de maintenant :
   pluie fine ou en gouttes ;
- dans l'intervalle de temps compris entre 22 et 34 minutes à compter de maintenant :
   pluie forte ou intense ;
- dans l'intervalle de temps compris entre 34 et 56 minutes à compter de maintenant :
   pluie fine ou en gouttes à nouveau; et
- dans l'intervalle de temps compris entre 56 et 60 minutes à compter de maintenant :
   absence de prévision.

Dans un autre mode de réalisation, illustré sur la figure 4, l'affichage est prévu pour indiquer aussi l'heure courante, à la manière d'une montre-bracelet. L'instant présent est alors mobile sur le cadran. Les prévisions de précipitations restent affichées pour l'heure à venir.

L'affichage 4 peut comporter une paire d'aiguilles 9, 10 classiques. Dans ce mode de réalisation, le marqueur de temps est indiqué par une seconde paire d'aguilles 11, 12 qui sont plus minces que les aiguilles 9 et 10 respectivement afin d'être mieux distinguées par l'utilisateur. Les aiguilles 11, 12 peuvent indiquer l'instant auquel ont été observées les données radar brutes utilisées pour la prévision immédiate des précipitations, ou l'instant du rafraîchissement des prévisions affichées (notamment s'il est significatif).

Dans l'exemple représenté, les aiguilles 9 et 10 indiquent 8 heures 25 minutes, et les aiguilles 11 et 12 indiquent 8 heures 22 minutes. Cela signifie que l'appareil 1 a reçu lors de la dernière mise à jour des données comportant un marqueur de temps indiquant 8 heures et 22 minutes, soit il y a 3 minutes. Cette heure est également indiquée par un affichage en pavé numérique au centre du cadran. Les prévisions de précipitations contenue dans ces données sont les suivantes :
- de 8 heures 25 à 8 heures 40 : pluie forte ou intense;
- de 8 heures 40 à 8 heures 55 : absence de pluie ;
- de 8 heures 55 à 9 heures : pluie fine ou en gouttes ;
- de 9 heures à 9 heures 10 : absence de pluie ;
- de 9 heures 10 à 9 heures 22 : pluie fine ou en gouttes à nouveau ;
- de 9 heures 22 à 9 heures 25 : absence ou inhibition de la prévision (pour marquer que la prévision précédemment affichée de 8 heures 22 à 8 heures 25 est devenue obsolète).

La période apparente de mise à jour de l'affichage est ici de l'ordre de 5 minutes, mais elle pourrait être, comme dans l'exemple de la figure 2, de l'ordre de la minute. Cette mise à jour est provoquée soit par le pilote 3, soit par une nouvelle réception de données météorologiques, soit par l'écoulement d'une durée déterminée.

Cette variante peut recevoir d'autres éléments décrits à propos de la figure 2. Par exemple, le cadran 4 peut, outre la graduation permanente 8, permettre l'affichage de mentions chiffrées (non représentées) indiquant les valeurs temporelles correspondant aux limite correspondantes 6A, 6B, 6C, 6D; 6E.

Inversement, la figure 4 fait apparaître d'autres éléments, comme le pavé numérique central, qui sont également applicables au cas de la figure 2.

Par ailleurs, l'exemple illustré sur la figure 4 est une montre-bracelet, mais il pourrait s'agir de tout autre système indiquant l'heure : horloge, réveil, pendule ou tout autre appareil comprenant une fonction d'affichage de l'heure.

Sur un autre plan, on remarque que l'origine (temps actuel) est fixe sur la figure 2, et mobile avec l'affichage de l'heure actuelle sur la figure 4. On pourrait concevoir une variante de la figure 2 dans laquelle l'origine (temps actuel) serait mobile en fonction d'un critère choisi, par l'exemple l'heure en cours (sans les minutes). De même, on pourrait concevoir une variante de la figure 4 dans laquelle l'origine (temps actuel) serait fixe, par exemple avec un affichage purement numérique du temps actuel.

L'exemple représenté sur la figure 5 se distingue des exemples précédents des figures 3 et 4 par la linéarité du cadran 4.

L'affichage des données peut être réalisé pour l'heure à venir, à chaque instant où à l'instant de la consultation - comme dans l'exemple de la figure 2 -, soit pour l'heure en cours - comme dans l'exemple de la figure 4.

Dans cette deuxième hypothèse, un curseur mobile (non représenté) pourra être prévu, pour indiquer sur le cadran 4 l'heure instantanée, un curseur supplémentaire pouvant indiquer l'heure à laquelle ont été observées les données radar brutes utilisées pour la prévision immédiate des précipitations la plus récente

Dans l'exemple illustré sur la figure 5, l'instant actuel est indiqué par l'extrémité gauche du cadran 4, portant la mention « 0 ». Un curseur 7 désigne ici aussi un segment d'origine, au droit de la mention « 55 ». Compte tenu de la nature cyclique de l'affichage, le curseur indique donc que les données radar brutes ont été observées 5 minutes avant l'instant actuel.

Les prévisions pour l'heure à venir sont les suivantes :
- d'ici à 10 minutes : absence de pluie ;
- dans l'intervalle de temps compris entre 10 et 25 minutes à compter de maintenant :
   pluie fine ou en gouttes ;
- dans l'intervalle de temps compris entre 25 et 40 minutes à compter de maintenant :
   pluie forte ou intense ;
- dans l'intervalle de temps compris entre 40 et 55 minutes à compter de maintenant :
   pluie fine ou en gouttes à nouveau; et
- dans l'intervalle de temps compris entre 55 et 60 minutes à compter de maintenant :
   absence de prévision.

Les opérations (ou "protocole") permettant à l'appareil 1 de disposer des prévisions de précipitations à afficher, en fonction de sa localisation géographique seront maintenant décrites à titre d'exemple à partir dé la figure 6.

Un centre de prévisions 15 reçoit périodiquement, par liaison avec un satellite 14, des données météorologiques d'un réseau 13 de radars météorologiques (par exemple le réseau ARAMIS - Application radar à la météorologie infra-synoptique- de Météo France). Ces données sont relatives aux observations radar de précipitations pour l'ensemble d'un territoire divisé en zones géographiques ou « cellules ».

Chaque cellule est constituée d'une parcelle du territoire observé, carrée, d'une surface de 1 km2 environ.

A chaque réception, le centre de prévisions 15 traite les données dans une opération 130. pour éliminer les éventuelles anomalies dans le signal, résultant d'interférences avec des obstacles tels que montagnes, collines, immeubles de grande hauteur, ou de propagations anormales du signal dans l'atmosphère. Ces données sont alors associées, en correspondance d'un identifiant de la cellule concernée à chaque fois, dans une première base de données 16.

Dans une opération 140, ces données sont alors comparées aux données des réceptions précédentes, et une extrapolation linéaire permet de prévoir l'évolution des précipitations pour l'heure à venir. Plus précisément, les données traitées sont utilisées pour déterminer le mouvement passé des précipitations observées par comparaison de leur dernière position observée avec leurs positions précédentes. Le mouvement des précipitations étant, pour simplifier, supposé uniforme dans l'heure à venir, une extrapolation linéaire permet de prévoir le mouvement à venir des précipitations pour chacune des 60 ou 75 minutes à venir, et ainsi d'affecter à chaque cellule un niveau prévu de précipitation.

Dans l'exemple décrit, cette évolution est caractérisée par l'affection d'un état de précipitation à chaque cellule du territoire étudié, chaque état correspondant aux états décrits plus haut. L'état est caractérisé par un symbole (de donnée) déterminé, qui signifie par exemple : absence de pluie, pluie fine ou en gouttes, pluie forte ou intense, ou pas de prévision disponible. L'extrapolation linéaire peut être utilisée pour effectuer des prévisions allant jusqu'à trois heures à venir.

Les données sont alors rassemblées par minute adjacente pour chaque cellule pour former des données de prévision. On obtient ainsi des données de prévision pour chaque cellule et pour l'heure à venir, formées par des couples prévision pluviale/durée, d'un symbole chacun. Dans ces couples, la durée est une minute et ils sont ordonnés dans les données de prévision par périodes consécutives d'une minute. Ces données de prévision sont alors stockées dans une seconde base de données 17, avec un marqueur de temps pouvant indiquer l'heure de réception des données radars brute ou encore l'heure d'émission des données brutes par les radars ou toute autre marqueur de temps permettant de caractériser les données de prévision.

Dans l'exemple à quatre états d'affichage, les couples prévision pluviale/durée se réduisent à une suite de "symboles", ordonnés dans le temps, et dont chacun peut être représenté simplement par deux bits (ou, si on le désire, un octet). Il suffit que l'un des symboles, par exemple le premier, soit accompagné d'une indication de l'heure (exacte) de prévision. Il en découle une charge de calcul réduite pour la précision proprement dite. C'est significatif dans la mesure où le calcul doit pouvoir être conduit pour un assez grand nombre de cellules différentes (ici de 1 km²) ; c'est également significatif dans la mesure où la transmission de données doit pouvoir se faire sans surcharge dans les réseaux existants vers un grand nombre d'usagers ; enfin, du côté usager, on peut se contenter d'un processeur relativement simple, peu onéreux, et à faible consommation électrique, avec des capacités restantes importantes pour la gestion de l'affichage. A cet égard, dans le mode de réalisation décrit, le "pilote" d'interface est considéré comme au moins partiellement incorporé à la mémoire du processeur.

Les données de prévision de la base 17 peuvent être rafraîchies, pour chaque cellule, à la fréquence des données radar brutes. Ces données sont rafraîchies selon une période théorique de l'ordre de 5 minutes. Comme on l'a vu dans l'exemple, un jeu de données rafraîchies est défini avec une résolution de l'ordre de la minute. Bien que non impérative, une résolution temporelle plusieurs fois supérieure à la période de rafraîchissement est avantageuse, par exemple pour pallier d'éventuels défauts erratiques de rafraîchissement.

On considère maintenant la télécommunication.

L'appareil 1 (téléphone cellulaire, ordinateur, montre, assistant numérique personnel, etc.) comporte des moyens de télécommunication qui comprennent un émetteur 18 et d'un récepteur 19. Ces moyens interagissent spontanément avec un relais de communication 20 sous forme d'une station (constitué d'antennes au sol ou d'une constellation de satellites) pour obtenir, entre autres, des données de prévision. Le relais ou station 20 obtient ces données d'un opérateur fixe de télécommunications 21 relié au centre de prévisions par une passerelle d'accès 22.

L'émetteur 18 établit la communication avec le relais 20 de manière systématique (c'est-à-dire indépendamment de toute action de l'utilisateur ou des utilisateurs) et périodique. Les données transmises à l'appareil 1 concernent une cellule dans laquelle il se trouve au moment de la réception de ces données. Cette cellule peut être déterminée de plusieurs manières dans une opération 150.

Dans le cas où l'appareil 1 est un téléphone cellulaire ou un appareil communiquant avec un réseau téléphonique sans fil, l'appareil 1 peut être localisé par rapport à la ou les antennes avec lesquelles il communique. La station 20 définit alors la cellule (au besoin en coopération avec ses voisines) et donc la zone géographique pour les données envoyées à l'appareil 1. Autrement dit, il est possible de calculer la position de l'appareil 1 par triangulation lorsque plusieurs relais ou stations 20 - dont les positions sont connues - reçoivent simultanément un signal en provenance de l'appareil 1.

L'appareil 1 peut aussi indiquer lui-même à la station 20 la zone géographique. Par exemple, celui-ci peut être équipé d'un module GPS ou équivalent, et transmettre une donnée représentant sa position (dans le domaine d'incertitude applicable) à la station 20 qui lui retourne des données en conséquence.

D'autres variantes sont envisageables pour transmettre les données de position géographique. Par exemple, d'autres moyens que ceux décrits plus haut permettent de localiser un appareil téléphonique. De plus, l'usager peut lui-même indiquer une position au clavier du téléphone, ou d'une autre manière, notamment lorsque sa position change peu. Une ou des positions mémorisées dans l'appareil sont également utilisables.

La position peut être redéfinie à chaque transmission, ou bien de temps à autre.

L'opérateur 21 interroge alors la seconde base de données 17, par l'intermédiaire de la passerelle d'accès 22, sélectionne les prévisions de précipitations relatives à la cellule correspondant à la position, pour les 60 ou 75 minutes à venir, avant de retourner à l'appareil 1, via le relais 20 et par l'intermédiaire du récepteur 19, les données de précipitations correspondantes.

Ainsi, les données que reçoit l'appareil 1 de la station 20 sont constituées de blocs de données relatives à des données de prévision dans la base 17 ainsi que du marqueur de temps qui leur est associé et désigne l'un des blocs. Les données de prévisions étant des couples prévision pluviale/durée où la durée est une minute, assemblés par minutes adjacentes, les blocs de données sont par conséquent relatifs à de courtes périodes consécutives de prévision pluviale, dont la durée est une minute.

Les prévisions issues des données des radars portant jusqu'à trois heures, les blocs de données peuvent par conséquent porter sur une durée globale de trois heures. Dans la pratique, la durée globale des blocs de données est d'environ 75 minutes. Cela permet d'avoir des prévisions pour l'heure à venir en permanence, même si des mises à jour échouent au niveau de l'appareil 1.

Une fois reçues, les données sont ensuite traitées par un processeur 23 et stockées dans une mémoire, et le pilote 3 commande alors leur affichage sur l'écran 2. C'est le processeur 23, relié à l'émetteur 18 et au récepteur 19, qui est programmé pour commander périodiquement (en pratique toutes les minutes) la communication entre l'émetteur 18 et le relais 20 afin de recevoir les données.

Dans le cas d'un téléphone cellulaire équipé d'une carte SIM, le processeur 23 peut être celui de la carte SIM, adapté au traitement des données de précipitations par une programmation adéquate du SIM-Toolkit.

Par ailleurs, les protocoles WAP ou i-mode (marque déposée) permettent de gérer conjointement l'affichage et les communications avec la passerelle 22.

Les moyens de communications interagissent de manière régulière et spontanée avec la station 20. La fréquence de ces interactions est ici de l'ordre d'une interaction toutes les 5 minutes, ce qui correspond en l'espèce à la fréquence de rafraîchissement des données radar. En fait, la fréquence des interactions peut être égale à la fréquence de rafraîchissement des données radar, inférieure à celle-ci, ou même supérieure, dans certains cas.

On comprendra que la fréquence d'interaction n'est pas à interpréter au sens d'une périodicité stricte. En effet, l'interaction peut-être initiée soit par les moyens de communication (par exemple après l'écoulement d'une durée donnée) ou par la station 20 (par exemple lors de la réception de nouvelles données radar), selon une fréquence de l'ordre de celle décrite ci-dessus.

Il est envisageable d'accéder plus fréquemment qu'une fois par 5 minutes à ces données, afin de créer une redondance d'informations permettant de palier à d'éventuels problèmes de transmission. Ainsi, on peut envisager un accès environ toutes les minutes. La combinaison de cette redondance d'information et l'utilisation d'une plage de prévisions élargie à 75. minutes assure à l'utilisateur d'avoir en permanence des prévisions.

L'appareil est donc capable :
a. d'interroger une station à distance pour en recevoir des données météorologiques,
b. d'afficher localement une représentation de ces données météorologiques.

L'étape a. est menée spontanément et répétitivement, d'une manière permettant de définir une zone géographique, et d'accéder de manière sensiblement régulière à un jeu de données comprenant des couples prévision pluviale/durée, valables dans la zone géographique pour des périodes consécutives, ce jeu de données étant daté par un marqueur de temps.

De son côté, l'étape b. comprend à chaque fois la mise à jour de segments d'affichage, ordonnés selon une plage, et capables chacun d'un affichage à plusieurs états, sélectivement en fonction du ou des couples prévision pluviale/durée que contiennent les données reçues et de la relation entre le marqueur de temps de ce jeu et une référence temporelle des segments. Cela peut être commandé, par l'interface 3, immédiatement après chaque communication.

Bien entendu, il est possible que l'appareil soit en déplacement. Les prévisions de précipitations qu'il affiche à chaque instant étant les dernières reçues, il est possible qu'il existe un décalage entre la cellule dans laquelle il se trouvait lors de la précédente réception, et la cellule dans laquelle il se trouve lors de la consultation par l'utilisateur. Comme mentionné précédemment, ce décalage n'apparaît toutefois pas problématique, le rafraîchissement des données étant systématique et fréquent.

La miniaturisation des systèmes de communication sans fil et des batteries d'accumulateurs met à la portée de l'homme du métier la réalisation concrète d'un émetteur récepteur de taille réduite et à la fois suffisamment puissant pour équiper notamment une montre-bracelet.

Dans l'hypothèse où les exigences des utilisateurs, en terme d'autonomie, ne permettraient pas de réaliser un appareil totalement indépendant dans son fonctionnement, il est possible de le rendre esclave d'un appareil secondaire muni d'un émetteur récepteur suffisamment puissant. Par exemple, il est possible de munir une montre-bracelet d'un système de communication de puissance réduite tout en asservissant la montre à un téléphone cellulaire muni d'un système de communication plus puissant Les systèmes de communication par infrarouges ou du type Bluetooth® permettront de réaliser un tel kit.

Ce qui vient d'être décrit vaut, dans son ensemble, pour les appareils de type mobile. Cependant, le principe de l'affichage exposé ci-dessus reste valable pour des appareils fixes tels que des horloges publiques ou des ordinateurs personnels domestiques, pour lesquels le calcul de la position géographique est inutile, seul le rafraîchissement des données étant nécessaire pour la cellule géographique immuable dans laquelle se trouve l'appareil.

Bien entendu, le protocole qui vient d'être décrit vaut, dans son ensemble, pour les appareils de type mobile. Toutefois, le principe de l'affichage exposé ci-dessus reste valable pour des appareils fixes tels que des horloges publiques ou des ordinateurs personnels domestiques, pour lesquels le calcul de la position géographique est inutile, seul le rafraîchissement des données étant nécessaire pour la cellule géographique immuable dans laquelle se trouve l'appareil.

L'affichage permanent des prévisions sur une montre-bracelet est particulièrement intéressant, car il permet de créer de nouvelles habitudes quotidiennes chez les porteurs de montres, pour lesquels la consultation des prévisions de précipitations devrait devenir un réflexe au même titre que la consultation de l'heure.

Cette nouvelle habitude est rendue techniquement possible grâce au rafraîchissement des prévisions affichées à la fréquence de rafraîchissement des données radar brutes.

Comme on l'aura compris, le dispositif décrit fait intervenir :
- des moyens de télécommunication agencés pour recevoir d'une source de données distante, indépendamment d'une action de l'utilisateur, des informations décrivant des prévisions de précipitations sur un intervalle temporel prédéterminé, valables dans une zone géographique incluant un emplacement estimé du dispositifet mises à jour à chaque réception, et
- une interface utilisateur agencée, d'une part pour présenter sur une plage correspondant à l'intervalle temporel prédéterminé les prévisions de précipitations décrites par les informations reçues, et d'autre part pour rafraîchir la présentation des prévisions à chaque réception.

Les prévisions étant affichées indépendamment de toute action de l'utilisateur, il n'est pas nécessaire à ce dernier d'effectuer une interrogation préalable de la source de données distante. La consultation des prévisions est, au contraire, immédiate.

Suivant un mode de réalisation, l'interface utilisateur est agencée pour un affichage permanent de prévisions de précipitations. De la sorte, l'utilisateur peut consulter les prévisions d'un simple regard.

Par ailleurs, les moyens de télécommunication peuvent être agencés pour une réception périodique des données décrivant les prévisions de précipitation avec une période inférieure à environ 5 minutes, et pourrait descendre jusqu'à 1 minute. De la sorte, l'utilisateur a accès à des informations rafraîchies quasiment en permanence.

Par ailleurs, il peut être fait en sorte que l'intervalle temporel prédéterminé ne dépasse pas trois heures. En pratique, cet intervalle est de préférence d'une heure environ, ou un peu plus.

L'interface utilisateur comporte de préférence un cadran chronologique représentatif d'un intervalle temporel prédéterminé, ce cadran étant susceptible d'être subdivisé en secteurs adjacents, chaque secteur représentant un sous-intervalle temporel repérable sur ledit cadran, les secteurs étant mutuellement séparés par des limites repérées chronologiquement sur ledit cadran, l'interface utilisateur comportant en outre des moyens pour afficher au sein d'au moins un secteur des informations représentatives d'une prévision de précipitation prédéterminée pour le sous-intervalle temporel correspondant à ce secteur.

La consultation par l'utilisateur est particulièrement ergonomique, la visualisation des prévisions étant immédiate.

Le cadran chronologique est par exemple représentatif d'un intervalle temporel d'une heure. Il peut s'agir d'une heure ayant pour origine l'instant actuel ou de l'heure en cours, comprise entre deux quantièmes entiers successifs. Dans ce dernier cas, un curseur mobile peut être prévu pour indiquer, sur le cadran, l'heure à laquelle ont été observées les données radar brutes utilisées pour la prévision immédiate des précipitations. De la sorte, l'utilisateur peut détecter une interruption (par exemple accidentelle) de la réception des données. Il est également en mesure d'apprécier la pertinence de la prévision, en tenant compte de la détérioration de la qualité de la prévision d'une précipitation en s'éloignant de l'heure de prévision.

Le cadran présente par exemple un contour circulaire, chaque secteur étant un secteur angulaire centré par rapport audit contour. En variante, le cadran peut, au contraire, être linéaire.

Quant aux prévisions de précipitations, elles sont par exemple de l'un des types suivants : absence de pluie, pluie fine ou en gouttes, pluie forte ou intense.

L'absence de pluie peut être indiquée par une coloration claire continue, la pluie fine ou en gouttes par des traits, et la pluie forte ou intense par une coloration foncée continue.

L'invention propose en second lieu une horloge ou une montre munie d'un cadran donnant l'heure et équipée d'un dispositifde signalisation tel que proposé ci-dessus, dont l'interface utilisateur est agencée pour présenter les prévisions de précipitations sur ledit cadran.

Compte tenu de la banalité du geste consistant à consulter l'heure sur une horloge ou une montre, il est ainsi aisé de créer un nouveau réflexe pour la consultation des prévisions de précipitations sur un objet similaire à celui qui équipe déjà une majorité de la population.

Ceci permet de signaler à au moins un utilisateur, au moyen d'un dispositif de signalisation muni d'une interface utilisateur, des prévisions de précipitations sur un intervalle temporel prédéterminé, par la répétition systématique des étapes suivantes :
- déterminer un intervalle temporel,
- localiser une zone géographique dans laquelle se trouve le dispositif de signalisation,
- rechercher dans une base de données les prévisions de précipitations valables sur ledit intervalle temporel et dans ladite zone géographique,
- communiquer ces données au dispositif de signalisation, et
- présenter les prévisions de précipitation au moyen de l'interface utilisateur.

La répétition des étapes a lieu périodiquement, la période étant par exemple inférieure à 5 minutes environ, et pourrait descendre jusqu'à 1 minute.

## Revendications

1. Dispositif télématique à affichage, du type comprenant :
- des moyens de télécommunication (18-19) capables d'interagir avec un réseau pour l'échange de données, et
- une interface utilisateur (2-3), capable d'interagir avec les moyens de télécommunication, pour afficher des informations tirées des données reçues,
dans lequel les moyens de télécommunication sont agencés pour recevoir des données météorologiques, dont il est tiré un affichage sur l'interface utilisateur,
caractérisé :
- en ce que les moyens de télécommunication (18-19) sont agencés pour interagir spontanément avec une station (20), afin d'une part de définir une zone géographique, et d'autre part d'accéder de manière sensiblement régulière (21) à un jeu de données comprenant des couples prévision pluviale/durée, valables dans ladite zone géographique pour des périodes consécutives, ce jeu de données étant daté par un marqueur de temps,
- en ce que l'interface utilisateur (2) possède une plage de segments d'affichage ordonnés (5A à 5E), capables chacun d'un affichage à plusieurs états, et
- en ce que le dispositif comprend un pilote (23, 3), capable de réagir à une réception d'un jeu de données par la mise à jour de l'état d'au moins un des segments d'affichage, et ceci sélectivement en fonction du ou des couples prévision pluviale/durée que contiennent les données reçues et de la relation entre le marqueur de temps de ce jeu et une référence temporelle des segments.

2. Dispositif selon la revendication 1, **caractérisé en ce que** le pilote traite les segments par rapport à un segment d'origine (5A; 6B), qui indique ladite référence temporelle, modulo une périodicité choisie, et **en ce qu'**à une réception d'un jeu de données, il met à jour au moins le ou les segments d'affichage correspondant à des données nouvelles.

3. Dispositif selon l'une des revendications 1 et 2, **caractérisé en ce que** le segment (5E) qui précède celui de la prévision actuelle fait l'objet d'un affichage distinctif.

4. Dispositif selon l'une des revendications précédentes, **caractérisé en ce que** l'interface utilisateur comporte également un organe d'affichage d'un temps et **en ce que** le pilote est agencé en outre pour mettre à jour cet organe d'affichage, d'après le marqueur de temps.

5. Dispositif selon l'une des revendications précédentes, **caractérisé en ce que** l'interface utilisateur comprend un curseur (12), propre à désigner l'un des segments.

6. Dispositif selon l'une des revendications précédentes, dans lequel l'interface utilisateur comprend en outre un cadran (4) d'affichage analogique du temps présent, **caractérisé en ce que** la plage ordonnée de segments d'affichage (5A-5E) est homologue dudit cadran (4).

7. Dispositif selon la revendication 6, prise en combinaison avec la revendication 5, **caractérisé en ce que** le curseur comprend une aiguille des minutes (12), actionnée selon le marqueur de temps.

8. Dispositif selon l'une des revendications précédentes, **caractérisé en ce qu'**il comprend une mémoire (23), pour stocker une partie au moins des données reçues.

9. Dispositif selon l'une des revendications précédentes, **caractérisé en ce qu'**un jeu de données reçu comprend (6) une séquence de blocs de données ou symboles, relatifs à de courtes périodes consécutives de prévision pluviale, le marqueur de temps étant relatif à l'un des blocs, et **en ce qu'**à chaque réception, le pilote de l'interface utilisateur est agencé pour faire correspondre l'état des segments aux contenus respectifs d'une partie au moins desdits blocs de données.

10. Dispositif selon la revendication 9, **caractérisé en ce que** la courte période associée à un bloc de données est d'environ 1 minute.

11. Dispositif selon l'une des revendications 9 et 10, **caractérisé en ce que** la séquence de blocs de données d'un jeu porte sur une durée globale au plus égale à environ trois heures.

12. Dispositif selon la revendication 11, **caractérisé en ce que** ladite durée globale est d'environ une heure.

13. Dispositif selon l'une des revendications précédentes, **caractérisé en ce que** la plage de segments (5A à 5E) s'étend selon une forme sensiblement linéaire.

14. Dispositif selon l'une des revendications précédentes, **caractérisé en ce que** la plage de segments (5A à 5E) s'étend selon une forme sensiblement circulaire.

15. Dispositif selon l'une des revendications précédentes, **caractérisé en ce que** les moyens de télécommunication interagissent avec une station (20) d'une manière capable d'assurer au moins partiellement la définition de la zone géographique.

16. Dispositif selon l'une des revendications précédentes, **caractérisé en ce que** la définition de la zone géographique est assurée au moins partiellement par des données transmises par les moyens de télécommunication (20).

17. Dispositif selon l'une des revendications précédentes, **caractérisé en ce que** les moyens de télécommunication interagissent avec le réseau selon une période environ égale 5 minutes.

18. Dispositif selon la revendication 17, **caractérisé en ce que** la période est supérieure à environ 1 minute.

19. Dispositif selon l'une des revendications précédentes, **caractérisé en ce que** les prévisions pluviales représentent les états pluviaux suivants: absence de pluie, pluie fine ou en gouttes, pluie forte ou intense.

20. Dispositif selon la revendication 19; **caractérisé en ce que** l'absence de pluie est affichée sur l'interface utilisateur par une coloration claire continue, la pluie fine ou en gouttes par des traits, et la pluie forte ou intense par une coloration foncée continue.

21. Dispositif selon l'une des revendications précédentes, **caractérisé en ce que** la zone géographique a une dimension sensiblement égale à 1 km2.

22. Procédé de signalisation télématique, comprenant les étapes suivantes :
a. interroger une station à distance pour en recevoir des données météorologiques,
b. afficher localement une représentation de ces données météorologiques, **caractérisé en ce que** :
- l'étape a. est menée spontanément et répétitivement, d'une manière permettant de définir une zone géographique, et d'accéder de manière sensiblement régulière (21) à un jeu de données comprenant des couples prévision pluviale/durée, valables dans ladite zone géographique pour des périodes consécutives, ce jeu de données étant daté par un marqueur de temps,
- l'étape b. comprend à chaque fois la mise à jour de segments d'affichage (5A à 5E), ordonnés selon une plage, et capables chacun d'un affichage à plusieurs états, sélectivement en fonction du ou des couples prévision pluviale/durée que contiennent les données reçues et de la relation entre le marqueur de temps de ce jeu et une référence temporelle des segments.

23. Procédé selon la revendication 22, **caractérisé en ce que** la répétition des étapes a lieu périodiquement, la période étant d'environ 5 minutes.

24. Procédé selon la revendication 23, **caractérisé en ce que** la période de répétition des étapes est supérieure à environ 1 minute.

25. Procédé selon l'une des revendications précédentes, **caractérisé en ce que** l'étape b. comprend l'affichage d'un état distinctif pour le segment (5E) qui précède celui de la prévision actuelle.

26. Procédé selon l'une des revendications précédentes, **caractérisé en ce que** l'étape b. comprend également la mise à jour d'après le marqueur de temps d'un organe d'affichage d'un temps que comporte l'interface utilisateur.

27. Procédé selon l'une des revendications précédentes, **caractérisé en ce qu'**il comporte l'affichage sur l'interface utilisateur du temps relativement à l'affichage des données météorologiques en fonction du marqueur de temps et de la référence temporelle des segments.

28. Procédé selon l'une des revendications précédentes, **caractérisé en ce que** l'étape a. comprend la réception d'un jeu de données qui comprend une séquence de blocs de données ou symboles, relatifs à de courtes périodes consécutives de prévision pluviale, le marqueur de temps étant relatif à l'un des blocs, et **en ce qu'**à chaque mise à jour, l'étape b. comprend la mise en correspondance de l'état des segments avec les contenus respectifs d'une partie au moins desdits blocs de données.

## Claims

1. Telematic display device of the type comprising:
- telecommunication means (18-19) capable of interacting with a network for data exchange, and
- a user interface (2-3) capable of interacting with the telecommunication means in order to display information derived from the received data,
wherein the telecommunication means are arranged to receive meteorological data, from which is derived a display on the user interface,
**characterised**
- **in that** the telecommunication means (18-19) are arranged to interact spontaneously with a station (20) in order to define a geographical area on the one hand, and on the other hand to access (21) substantially regularly a data set comprising rainfall forecast/duration pairs which are valid in the geographical area for consecutive periods, this data set being dated by a timestamp;
- **in that** the user interface (2) has a range of ordered display segments (5A to 5E) each capable of display according to a plurality of states, and
- **in that** the device comprises a pilot (23, 3) capable of reacting to the reception of a data set by updating the state of at least some of the display segments, selectively according to the rainfall forecast/duration pairs which the data received contain and according to the relation between the timestamp of this set and a time reference of the segments.

2. Device according to claim 1, **characterised in that** the pilot processes the segments relative to an origin segment (5A Fig. 2; 6B, Fig. 4) which indicates the time reference, modulo a selected periodicity, and **in that** upon receiving a data set, it updates at least the display segment(s) corresponding to new data.

3. Device according to either of claims 1 or 2, **characterised in that** the segment (5E) preceding that of the current forecast is subject to a distinctive display.

4. Device according to one of the preceding claims, **characterised in that** the user interface also comprises a time display unit, and **in that** the pilot is further arranged to update this display unit according to the timestamp.

5. Device according to one of the preceding claims, **characterised in that** the user interface comprises a cursor (12) capable of designating one of the segments.

6. Device according to one of the preceding claims, wherein the user interface further comprises a dial (4) for analogue display of the present time, **characterised in that** the ordered range of display segments (5A-5E) is homologous with said dial (4).

7. Device according to claim 6, taken in combination with claim 5, **characterised in that** the cursor has a minute hand (12) actuated according to the timestamp.

8. Device according to one of the preceding claims, **characterised in that** it comprises a memory (23) for storing at least some of the received data.

9. Device according to one of the preceding claims, **characterised in that** a received data set comprises (6) a sequence of data blocks or symbols relating to short consecutive periods of rainfall forecast, the timestamp relating to one of these blocks and, **in that** upon each reception, the user interface pilot is arranged to match the state of the segments to the respective contents of at least some of said data blocks.

10. Device according to claim 9, **characterised in that** the short period associated with a data block is about 1 minute.

11. Device according to either of claims 9 or 10, **characterised in that** the sequence of data blocks of a set relates to an overall duration at most equal to about three hours.

12. Device according to claim 11, **characterised in that** the overall duration is about 1 hour.

13. Device according to one of the preceding claims, **characterised in that** the range of segments (5A to 5E) extends substantially linearly.

14. Device according to one of the preceding claims, **characterised in that** the range of segments (5A to 5E) extends in a substantially circularly.

15. Device according to one of the preceding claims, **characterised in that** the telecommunication means interact with a station (20) in a manner capable of enabling at least partly the definition of the geographical area.

16. Device according to one of the preceding claims, **characterised in that** the definition of the geographical area is enabled at least partly by data transmitted by the telecommunication means (20).

17. Device according to one of the preceding claims, **characterised in that** the telecommunication means interact with the network according to a period of about 5 minutes.

18. Device according to claim 17, **characterised in that** the period is longer than about 1 minute.

19. Device according to one of the preceding claims, **characterised in that** the rainfall forecasts represent the following rainfall states: absence of rain, fine or light rain, heavy or intense rain.

20. Device according to claim 19, **characterised in that** the absence of rain is displayed on the user interface by a continuous light colour, the fine or light rain by lines, and the heavy or intense rain by a continuous dark coloration.

21. Device according to one of the preceding claims, **characterised in that** the geographical area has a dimension substantially equal to 1 km².

22. Method of telematic signalling, comprising the following steps:
a. querying a remote station in order to receive meteorological data therefrom,
b. locally displaying a representation of these meteorological data, **characterised in that**
- step a. is carried out spontaneously and repetitively in a manner which makes it possible to define a geographical area and to have access substantially regularly (21) to a data set comprising rainfall forecast/duration pairs which are valid in the geographical area for consecutive periods, this data set being dated by a timestamp,
- step b. comprises both updating the display segments (5A to 5E) ordered according to a range, and each being capable of display according to a plurality of states selectively according to the rainfall forecast/duration pairs which the data received contain and according to the relation between the timestamp of this set and a time reference of the segments.

23. Method according to claim 22, **characterised in that** the repetition of the steps occurs periodically, the period being about 5 minutes.

24. Method according to claim 23, **characterised in that** the repetition period of the steps is more than about 1 minute.

25. Method according to one of the preceding claims, **characterised in that** step b. comprises displaying a distinctive state for the segment (5E) which precedes that of the current forecast.

26. Method according to one of the preceding claims, **characterised in that** step b. also comprises updating a time display unit which the user interface comprises according to the timestamp.

27. Method according to one of the preceding claims, **characterised in that** it comprises displaying on the user interface the time relating to the display of the meteorological data according to the timestamp and the time reference of the segments.

28. Method according to one of the preceding claims, **characterised in that** step a. comprises the reception of a data set which comprises (Fig. 6) a sequence of data blocks or symbols relating to short consecutive periods of rainfall forecasting, the timestamp relating to one of the blocks, and **in that** at each update, step b. comprises matching the state of the segments with the respective contents of at least some of the data blocks.

## Patentansprüche

1. Telematische Anzeigevorrichtung, bestehend aus:
- Telekommunikationseinrichtungen (18-19), die in der Lage sind, mit einem Netzwerk zum Austausch von Daten zu interagieren, und
- einem Benutzerinterface (2-3), das in der Lage ist, mit den Telekommunikationseinrichtungen zu interagieren, um Informationen, die von den erhaltenen Daten gezogen wurden, anzuzeigen, bei der die Telekommunikationseinrichtungen ausgebildet sind, um meteorologische Daten aufzunehmen, von denen eine Anzeige auf dem Interface des Benutzers gezogen ist,
**dadurch gekennzeichnet:**
- **dass** die Telekommunikationseinrichtungen (18-19) ausgebildet sind, um spontan mit einer Station (20) zu interagieren, um einerseits eine geografische Zone zu definieren, und andererseits auf im Wesentlichen regelmäßige Weise (21) auf einen Satz von Daten zuzugreifen, der Paare Regenvorhersage/-dauer aufweist, die in der geografischen Zone für aufeinanderfolgende Zeiträume gültig sind, wobei der Satz von Daten von einem Zeitmarker datiert ist,
- **dass** das Benutzerinterface (2) einen geordneten Anzeigesegmentbereich (5A-5E) besitzt, von denen jeder in der Lage einer Anzeige von mehreren Zuständen ist, und
- **dass** die Vorrichtung einen Lotsen (23, 3) aufweist, der in der Lage ist, auf einen Empfang eines Satzes von Daten durch die Zustandsaktualisierung wenigstens eines der Anzeigesegmente zu reagieren, und dies ausgewählt in Abhängigkeit des Paares oder der Paare Regenvorhersage/-dauer, die die empfangenen Daten enthalten, und dem Verhältnis zwischen dem Zeitmarker dieses Satzes und einer Zeitreferenz der Segmente.

2. Vorrichtung nach Anspruch 1, **dadurch gekennzeichnet, dass** der Lotse die Segmente bezüglich einem Originalsegment (5A-6B) verarbeitet, das die Zeitreferenz angibt, eine gewählte Periodizität moduliert, und dass bei einer Aufnahme eines Datensatzes, er wenigstens das oder die Anzeigesegmente entsprechend den neuen Daten aktualisiert.

3. Vorrichtung nach Anspruch 1 oder 2, **dadurch gekennzeichnet, dass** das Segment (5E), das dem der aktuellen Vorhersage vorhergeht, Gegenstand einer gesonderten Anzeige ist.

4. Vorrichtung nach einem der vorhergehenden Ansprüche, **dadurch gekennzeichnet, dass** das Benutzerinterface ebenfalls ein Anzeigeorgan einer Zeit aufweist, und dass der Lotse darüberhinaus ausgebildet ist, um dieses Anzeigeorgan gemäß dem Zeitmarker zu aktualisieren.

5. Vorrichtung nach einem der vorhergehenden Ansprüche, **dadurch gekennzeichnet, dass** das Benutzerinterface einen Curser (12) aufweist, der geeignet ist, eines der Segmente zu bezeichnen.

6. Vorrichtung nach einem der vorhergehenden Ansprüche, bei der das Benutzerinterface darüberhinaus eine analoge Anzeigeskala (4) der aktuellen Zeit aufweist, **dadurch gekennzeichnet, dass** der geordnete Bereich der Anzeigesegmente (5A-5E) homolog zu der Skala (4) ist.

7. Vorrichtung nach Anspruch 6, in Verbindung mit Anspruch 5, **dadurch gekennzeichnet, dass** der Curser einen Minutenzeiger (12) aufweist, der gemäß dem Zeitmarker betätigt wird.

8. Vorrichtung nach einem der vorhergehenden Ansprüche, **dadurch gekennzeichnet, dass** sie einen Speicher (23) aufweist, um wenigstens einen Bereich der empfangenen Daten zu speichern.

9. Vorrichtung nach einem der vorhergehenden Ansprüche, **dadurch gekennzeichnet, dass** ein empfangener Datensatz (6) eine Reihe von Datenblöcken oder Datensymbolen aufweist, die bezogen sind auf kurze aufeinanderfolgende Perioden von Regenvorhersagen, wobei der Zeitmarker bezogen ist auf einen der Blöcke, und dass bei jedem Empfang der Lotse des Benutzerinterfaces ausgebildet ist, um den Zustand der Segmente den entsprechenden Inhalten wenigstens eines Teils der Datenblöcke in Bezug zu setzen.

10. Vorrichtung nach Anspruch 9, **dadurch gekennzeichnet, dass** die einem Datenblock zugeordnete kurze Periode ungefähr eine Minute ist.

11. Vorrichtung nach Anspruch 9 oder 10, **dadurch gekennzeichnet, dass** die Datenblockfolge eines Satzes über eine globale Dauer höchstens ungefähr drei Stunden beträgt.

12. Vorrichtung nach Anspruch 11, **dadurch gekennzeichnet, dass** die globale Dauer ungefähr eine Stunde ist.

13. Vorrichtung nach einem der vorhergehenden Ansprüche, **dadurch gekennzeichnet, dass** der Segmentbereich (5A-5E) sich gemäß einer im Wesentlichen linearen Form erstreckt.

14. Vorrichtung nach einem der vorhergehenden Ansprüche, **dadurch gekennzeichnet, dass** der Segmentbereich (5A-5E) sich entlang einer im Wesentlichen Kreisform erstreckt.

15. Vorrichtung nach einem der vorhergehenden Ansprüche, **dadurch gekennzeichnet, dass** die Telekommunikationseinrichtungen mit einer Station (20) interagieren, auf eine Weise, mit der sie in der Lage ist, wenigstens teilweise die Definition der geografischen Zone sicherzustellen.

16. Vorrichtung nach einem der vorhergehenden Ansprüche, **dadurch gekennzeichnet, dass** die Definition der geografischen Zone wenigstens teilweise durch Daten sichergestellt ist, die durch Telekommunikationseinrichtungen (20) übertragen werden.

17. Vorrichtung nach einem der vorhergehenden Ansprüche, **dadurch gekennzeichnet, dass** die Telekommunikationseinrichtungen mit dem Netz gemäß einer Periode von ungefähr fünf Minuten interagieren.

18. Vorrichtung nach Anspruch 17, **dadurch gekennzeichnet, dass** die Periode größer ist als ungefähr eine Minute.

19. Vorrichtung nach einem der vorhergehenden Ansprüche, **dadurch gekennzeichnet, dass** die Regenvorhersagen die folgenden Regenzustände darstellen: Abwesenheit von Regen, leichter Regen oder in Tropfen, starker oder intensiver Regen.

20. Vorrichtung nach Anspruch 19, **dadurch gekennzeichnet, dass** das nicht Vorhandensein von Regen am Benutzerinterface durch eine kontinuierliche helle Farbgebung, der leichte Regen oder Tropfenregen durch Striche und der starke oder intensive Regen durch eine kontinuierliche dunkle Farbgebung angezeigt wird.

21. Vorrichtung nach einem der vorhergehenden Ansprüche, **dadurch gekennzeichnet, dass** die geografische Zone eine Größe im Wesentlichen gleich 1 km² hat.

22. Verfahren zur telematischen Anzeige, das die folgenden Schritte aufweist:
a. Anfragen einer Station von der Ferne, um meteorologische Daten zu empfangen,
b. lokales Anzeigen einer Darstellung der meteorologischen Daten, **dadurch gekennzeichnet, dass**:
- der Schritt a. spontan und wiederholt durchgeführt wird, auf eine Weise, die erlaubt, eine geografische Zone zu definieren, und auf im Wesentlichen regelmäßige Weise (21) auf einen Datensatz zuzugreifen, der Vorhersagepaare Regen/Dauer aufweist, die in der geografischen Zone für aufeinanderfolgende Zeitabschnitte gültig ist, wobei der Datensatz durch einen Zeitmarker datiert ist,
- der Schritt b. jedes Mal die Aktualisierung der Anzeigesegmente (5A-5E) aufweist, geordnet nach den Bereichen, und jeweils in der Lage einer Anzeige mit mehreren Zuständen, ausgewählt in Abhängigkeit des oder der Vorhersagepaare Regen/Dauer, die die empfangenen Daten enthalten und des Verhältnisses zwischen dem Zeitmarker dieses Satzes und einer Zeitreferenz der Segmente.

23. Verfahren nach Anspruch 22, **dadurch gekennzeichnet, dass** die Wiederholung der Schritte periodisch stattfindet, wobei die Periode ungefähr fünf Minuten ist.

24. Verfahren nach Anspruch 23, **dadurch gekennzeichnet, dass** die Wiederholperiode der Schritte ungefähr eine Minute ist.

25. Verfahren nach einem der vorhergehenden Ansprüche, **dadurch gekennzeichnet, dass** der Schritt b. die Anzeige eines getrennten Zustands für das Segment (5E) aufweist, die jener der aktuellen Vorhersage vorhergeht.

26. Verfahren nach einem der vorhergehenden Ansprüche, **dadurch gekennzeichnet, dass** der Schritt b. ebenfalls die Aktualisierung nach dem Zeitmarker eines Anzeigeorgans einer Zeit aufweist, den das Benutzerinterface aufweist.

27. Verfahren nach einem der vorhergehenden Ansprüche, **dadurch gekennzeichnet, dass** es die Anzeige auf dem Benutzerinterface der Zeit bezogen auf die meteorologische Datenanzeige in Abhängigkeit des Zeitmarkers und der Zeitreferenz der Segmente aufweist.

28. Verfahren nach einem der vorhergehenden Ansprüche, **dadurch gekennzeichnet, dass** der Schritt a. die Aufnahme eines Datensatzes aufweist, der eine Folge von Datenblöcken oder Datensymbolen aufweist, die bezogen sind auf kurze aufeinanderfolgende Perioden von Regenvorhersagen, wobei der Zeitmarker bezogen ist auf einen der Blöcke, und dass bei jeder Aktualisierung der Schritt b. das In-Verbindung-Bringen des Segmentzustands mit den entsprechenden Inhalten wenigstens eines Bereichs der Datenblöcke aufweist.
